# FASCICULE DE BREVET EUROPEEN

(11) **EP 3 794 192 B1**
(45) Date de publication et mention de la délivrance du brevet: **16.03.2022**
(21) Numéro de dépôt: 19733848.6
(22) Date de dépôt: 14.05.2019
(51) Int. Cl.: E05B 83/18, E05B 81/14, E05B 81/04, E05B 81/34, B60N 2/36, B60N 2/90

(54) **SERRURE ÉLECTRIQUE DE DOSSIER DE VÉHICULE AUTOMOBILE**
ELEKTRISCHES SCHLOSS FÜR RÜCKENLEHNE EINES KRAFTFAHRZEUGS
MOTOR VEHICLE BACKREST ELECTRIC LOCK

(30) Priorité: 16.05.2018 FR 1870569
(43) Date de publication de la demande: 24.03.2021
(73) Titulaire: U-Shin France, 94000 Créteil (FR)
(72) Inventeur: GODARD, Jerry, 80100 ABBEVILLE (FR)
(74) Mandataire: Germain Maureau
(86) Numéro de dépôt international: PCT/FR2019/051095
(87) Numéro de publication internationale: WO 2019/220051

(56) Documents cités:
- EP-A1- 1 410 945
- EP-B1- 1 410 945
- WO-A1-2008/145668
- DE-A1-102010 045 207

## Description

La présente invention concerne une serrure électrique pour le verrouillage et le déverrouillage d'un siège ou dossier de véhicule automobile, de préférence pour les banquettes arrière.

Une serrure de dossier de véhicule automobile comporte typiquement un pêne destiné à pivoter, lors de la fermeture, dans un sens autour d'une gâche fixée sur une structure afin d'assurer la fermeture et le maintien du dossier ou siège du véhicule.

Le rabattement du dossier ou de la banquette, pour augmenter le volume du coffre par exemple, est permis par une libération du dossier tenu par la serrure suite à une rotation du pêne en sens inverse. Cette rotation en sens inverse pour rabattre le dossier se fait généralement à l'aide d'une poignée située sur le siège du véhicule et reliée à la serrure par un moyen de commande de type câble ou tige qui agit principalement sur un levier d'ouverture afin de faire pivoter le cliquet qui libère à son tour le pêne via un dispositif d'accrochage dans la direction souhaitée.

Il est envisageable d'avoir une poignée au niveau des articulations du siège pour piloter le verrouillage/déverrouillage voire d'avoir une tirette dans le coffre pour agir manuellement sur le cliquet et libérer le pêne. Ceci évite d'avoir à repasser dans l'habitacle pour déverrouiller la serrure et pouvoir rabattre le dossier ou la banquette.

L'utilisation des systèmes électriques pour commander des éléments mobiles à l'intérieur de l'habitacle est un phénomène de plus en plus répandu, ce qui correspond à des exigences de confort de plus en plus fortes.

Ainsi, pour les sièges de véhicule avec un déverrouillage électrique, la solution courante consiste aussi à avoir un actionneur motorisé déporté du fait du volume requis pour ces derniers. Le moteur peut ainsi être déporté dans l'assise ou sur le bas côté de la banquette par exemple.

Dans cette approche, on connait par exemple la demande de brevet US7635166 qui concerne un dispositif de commande de type poignée pour un dispositif de verrouillage de type serrure qui verrouille un dossier de siège, pourvu : d'un support ayant une ouverture à une extrémité supérieure de celui-ci; un bouton d'actionnement qui est prévu dans l'ouverture du support, et qui transmet le mouvement à la serrure du siège lors d'une intervention humaine sur la poignée.

Ce dispositif présente l'inconvénient d'être à la fois volumineux car il s'agit de deux parties distinctes, à savoir la poignée d'une part et la serrure d'autre part et peu confortable car nécessitant systématiquement d'activer soi même le déverrouillage du siège. Le confort sera d'autant plus réduit que la poignée sera à un endroit peu pratique du point de vue accès.

Afin de remédier à cette nécessité d'intervention humaine, on connait aussi la demande de brevet EP1410945 qui concerne un verrou de siège arrière, destiné notamment à des véhicules automobiles, qui présente un dispositif de contrôle électrique basé sur un moteur et activé à distance. Ce verrou est dissimulé par des couvertures adéquates de sorte qu'aucun dispositif de contrôle ne soit visible.

Ce dispositif nécessite un moyen de type câble ou tige pour déverrouiller la serrure, rajoutant de la complexité. En outre, le moteur de cette serrure nécessite la présence de commutateurs pour obtenir des informations de position de la roue de l'actionneur afin de savoir quand fonctionner par exemple en marche arrière ou réinitialiser l'actionneur. Ceci rajoute de la complexité et des éléments électriques susceptibles de défaillance.

Afin de remédier à tous ces inconvénients, l'invention propose une solution qui permette d'avoir une serrure de dossier autonome et compacte sous forme de module intégré. Le document DE-A-10 2010 045207 montre une serrure électrique selon le préambule de la revendication 1.

Pour ce faire, le but de l'invention est de proposer une serrure électrique pour un siège rabattable de véhicule automobile, située à l'intérieur d'un boîtier, la serrure comprenant :
- un moyen de verrouillage apte à se déplacer entre une position dans laquelle une gâche est retenue et une position dans laquelle ladite gâche est libérée,
- un élément de blocage apte à se déplacer entre une position de blocage du moyen de verrouillage dans ladite position de retenue de gâche et une position d'effacement par rapport au déplacement du moyen de verrouillage ,
- un levier de transmission solidaire avec l'élément de blocage de manière à le déplacer entre les positions de blocage du moyen de verrouillage en position de retenue de gâche et d'effacement par rapport au mouvement de déplacement du moyen de verrouillage,
- un actionneur comportant un moteur électrique, l'actionneur étant apte à déplacer le levier de transmission, caractérisée en ce que le levier de transmission se déplace autour d'un axe de rotation A1 et possède deux bras s'étendant radialement à partir de l'axe, le premier bras présentant à son extrémité une poignée pour déplacer manuellement le levier de transmission et le second bras présentant à son extrémité un moyen de solidarisation avec l'élément de blocage.

De manière préférentielle, le moyen de verrouillage est un pêne rotatif autour de son axe A2 comprenant un dégagement apte à recevoir une gâche et l'élément de blocage est un cliquet rotatif autour de son axe A3, ledit cliquet comportant deux excroissances radiales dont la première est apte est venir en butée contre le pêne pour le maintenir en position de retenue de gâche et la seconde est une rotule apte à être déplacée par le levier de transmission.

Dans une alternative selon l'invention, le moyen de solidarisation présente la forme d'une fourche à deux dents, dont l'espace entre les deux dents est apte à saisir l'élément de blocage pour pouvoir le déplacer entre lesdites positions de blocage et d'effacement. Ceci sous entend que le moyen de solidarisation est préférentiellement un élément faisant partie du levier de transmission et que cet élément est distinct de l'élément de blocage. Néanmoins la solidarisation par la fourche permet d'éviter la présence de jeu pouvant générer des bruits désagréables tout en permettant l'entrainement dans les deux sens grâce aux deux dents.

Dans un mode de réalisation préféré de l'invention, le moyen de solidarisation comporte un troisième bras s'étendant transversalement par rapport au levier de transmission et comportant un évidement apte à recevoir un élément d'entrainement de l'actionneur. Ceci présente l'avantage de permettre au moyen de solidarisation-et donc au levier de transmission- de pouvoir être entrainé en rotation par l'actionneur à travers l'évidement. Le même levier de transmission qui agit sur l'élément de blocage peut ainsi être mu à la fois par la poignée et par l'actionneur à travers le moyen de solidarisation.

Préférentiellement, l'actionneur selon l'invention comporte une vis sans fin entrainée en rotation par le moteur, la vis entraînant en rotation une roue dentée entraînante apte à entraîner en rotation à son tour une roue dentée entraînée, ladite roue dentée entraînée présentant au moins un élément d'entraînement radialement excentré et en saillie axiale par rapport à son axe de rotation A4. Cet engrenage compact permet d'optimiser le dimensionnement du moteur pour déplacer le levier de transmission avec le minimum de volume. On peut ainsi avoir toute la serrure électrique dans un boitier compact et facile à fixer sur un dossier de véhicule.

Idéalement, la roue dentée entraînée présente deux éléments d'entraînements diamétralement opposés et disposés sur la même face de ladite roue dentée entraînée (35). On divise ainsi par deux la distance à parcourir pour pouvoir déverrouiller la serrure, améliorant ainsi la durée de vie de l'actionneur et donc de la serrure. En outre et surtout, ceci permet une rotation de 180° pour, à chaque fois, pouvoir déplacer le levier de transmission 1 par appui sur les parois coplanaires de l'évidement 131. Le second pion vient en butée arrêter le déplacement du bras 13.

Afin de pouvoir changer de plan dans l'actionneur et utiliser tout l'espace disponible, la roue dentée entraînante entraîne en rotation la roue dentée entraînée par le biais d'un pignon.

Pour optimiser le contact entre l'évidement et l'élément d'entrainement, ce dernier est un pion en forme de goutte d'eau en saillie axiale de la roue dentée entraînée de manière à déplacer le levier de transmission par butée - de l'élément d'entraînement - sur les surfaces de contact de l'évidement.

Afin d'améliorer encore plus la compacité et de manière préférentielle, les axes A1 et A4 sont parallèles, les axes A2 et A3 sont parallèles, les axes A2 et A3 étant perpendiculaires aux axes A1 et A4.

Dans un mode de réalisation préféré, l'élément de blocage est relié à un moyen élastique apte à le rappeler vers la position de blocage du moyen de verrouillage dans la position de retenue de gâche, ceci permet à l'élément de blocage de bloquer le moyen de verrouillage dès que la gâche est en prise avec ce dernier. En outre, le moyen de verrouillage est relié à un moyen élastique apte à le rappeler vers la position de libération de gâche, ceci permet au moyen de verrouillage d'accompagner le déverrouillage du dossier lors de l'ouverture, ce mouvement étant plutôt dû à un déplacement du dossier motorisé ou sous l'effet d'un moyen élastique de type ressort.

Idéalement, la serrure selon l'invention est solidaire d'un support apte à être solidarisé avec une armature de siège et elle ne comprend ni câble ni tige pour déplacer le moyen de verrouillage dans une position dans laquelle ladite gâche est libérée.

En outre, de manière préférentielle, la serrure selon l'invention ne comprend pas de commutateur afin de fournir une instruction d'arrêt au moteur voire d'inversion de sens de rotation.

D'autres avantages et caractéristiques apparaîtront à la lecture de la description de la serrure électrique selon l'invention donnée à titre d'exemple ci-dessous, ainsi que sur les figures annexées sur lesquelles :
La figure 1 est une vue en perspective de la serrure selon l'invention dans son boitier.
La figure 2 illustre la serrure selon l'invention selon un mode réalisation préféré, fixée sur un support associé à une armature de siège.
La figure 3 illustre la serrure selon l'invention dans une position fermée où elle emprisonne une gâche.
Les figures 4A et 4B montrent la serrure selon l'invention selon deux perspectives différentes.
La figure 5 montre la serrure selon l'invention en dissimulant l'actionneur motorisé.
Les figures 6A et 6B illustrent la serrure selon l'invention en vue de face.
La figure 7 est une vue isolée du levier de transmission selon l'invention.
La figure 8 est une vue isolée de la roue dentée entraînée de l'actionneur selon l'invention.

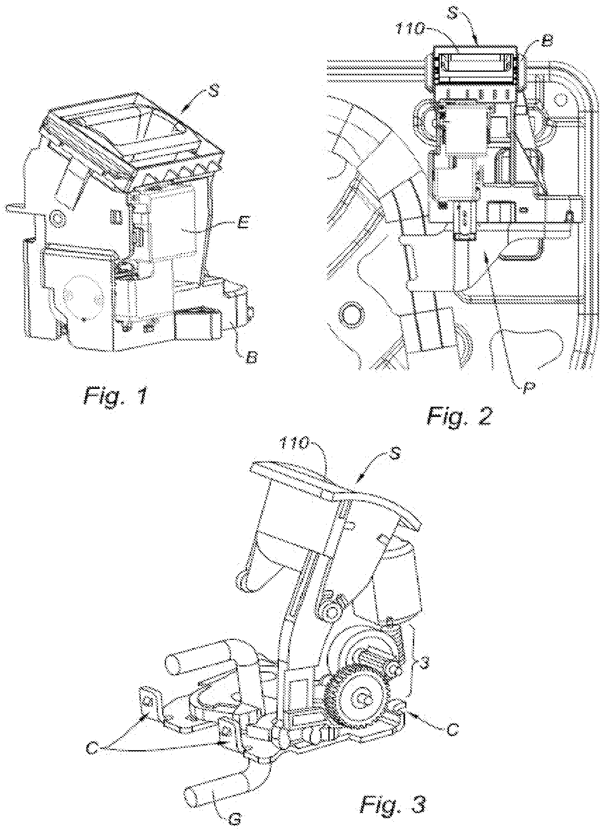

En référence aux figures 1 et 2, la serrure électrique S selon l'invention est comprise dans un boitier B en plastique afin d'en réduire le poids et le coût. L'actionneur de la serrure selon l'invention peut tout à fait être lui aussi être situé à l'intérieur d'une enveloppe E pour l'isoler et le protéger (cf. figure 1).

L'enveloppe peut aussi être en plastique ou d'un matériau métallique de type Zamak (alliage de Zn). En tout état de cause la poignée 110 pour déplacer manuellement le levier de transmission 1 doit par contre être accessible à tout utilisateur de la poignée.

A la figure 2, on voit un support P offrant un appui fixe de la serrure qui est fixée à l'aide de 2 vis qui traversent le pêne par l'axe A2 et le cliquet par l'axe 3. La serrure S est fixée sur le support P à l'aide de 2 vis. Le boitier B est solidaire de la rétention par une platine équipée de crochets C (cf. figure 3).

A la figure 3, on voit une gâche G en prise avec la serrure selon l'invention de manière à ce que lorsque la gâche est fixée sur un élément fixe du véhicule et la serrure est située sur le dossier du siège rabattable, le dossier soit tenu par la gâche. En déverrouillant la serrure, en agissant sur la poignée 110 ou à distance électriquement, le siège devient rabattable voire rabattu si poussé par un mécanisme de type ressort.

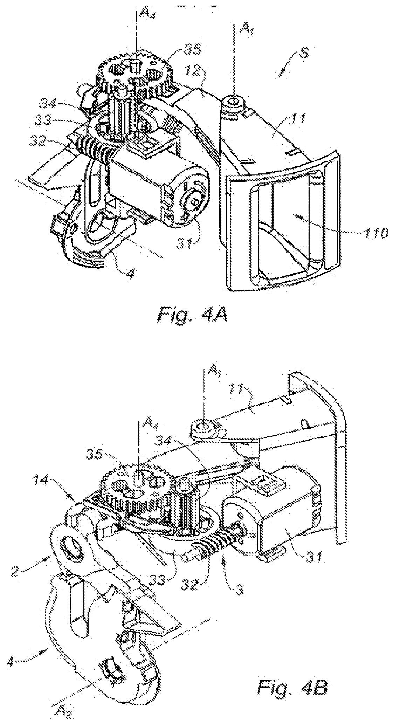

Les figures 4A et 4B illustrent la serrure selon l'invention selon deux perspectives distinctes. On distingue sur la figure 4A le levier de transmission 1 qui est apte à se déplacer autour d'un axe de rotation A1 et qui possède deux bras 11 et 12 qui s'étendent radialement à partir de l'axe A1 et dans deux directions opposées en l'occurrence pour allonger la portée du levier de transmission 1.

Le premier bras 11 présente à son extrémité distale du cliquet 2 (cf. fig. 4B) une poignée 110 pour déplacer manuellement le levier de transmission 1 et le second bras 12 présente à son extrémité proximale du cliquet 2 un moyen de solidarisation 14 avec ledit cliquet 2. Le moyen de solidarisation 14 est une fourche à deux dents en prise avec le cliquet 2.

Le levier de transmission 1 est relié au cliquet 2 et permet de faire pivoter celui-ci entre une position de blocage du pêne 4 dans une position de retenue de gâche G (cf. fig. 3) et une position d'effacement par rapport au mouvement de déplacement du pêne 4. A la figure 4B, on voit que le pêne 4 est apte à tourner autour d'un axe A2 préférentiellement perpendiculaire à l'axe A1 de rotation du levier de transmission 1.

Ceci permet un gain en espace pour la serrure. Dans cette figure 4B, le cliquet 2 retient le pêne 4 qui emprisonne une gâche (non représentée à la fig. 4B). En effet, le cliquet 2 retient de manière connue le pêne 4 contre une rotation dans le sens antihoraire en référence à la figure 4B. Ce sens de rotation antihoraire correspond à celui de rabattement du siège du véhicule automobile.

Aux figures 4A et 4B on distingue aussi un actionneur 3 dont la fonction est de mouvoir de manière motorisée le cliquet 2 pour faire pivoter celui-ci entre une position de blocage du pêne 4 dans une position de retenue de gâche G (cf. fig. 3) et une position d'effacement par rapport au mouvement de déplacement du pêne 4.

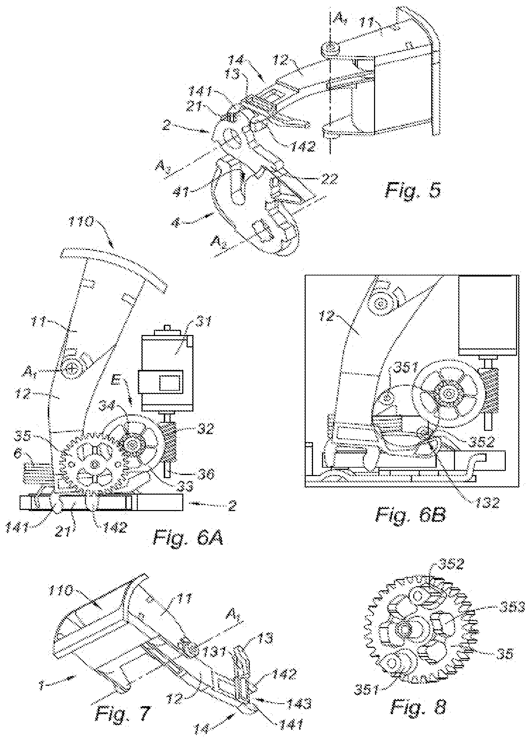

Pour ce faire, l'actionneur comprend les éléments visibles à la figure 4B, à savoir un ensemble moteur 31 et vis sans fin 32 sur l'axe 36 (fig.6A) du moteur, une roue 33 dentée (dents non représentées sur la figure 4B), la roue dentée 33 présentant dans son axe de rotation un pignon 34 transmettant sa rotation à une autre roue dentée entraînée 35 tournant autour d'un axe A4. Cet actionneur 3 joue sur le cliquet 2 à travers le levier de transmission 1 auquel il est directement relié.

A la figure 5, sont illustrés les éléments de la serrure selon l'invention permettant le déplacement du cliquet de manière manuelle i.e. de manière non motorisée. L'actionneur 3 n'a pas été illustré pour faciliter la compréhension.

L'axe de rotation A3 du cliquet est parallèle à celui A2 du pêne. On distingue aussi clairement le pêne rotatif 4 comprenant un dégagement 41 apte à recevoir une gâche G tel qu'illustré à la figure 3. En outre, on voit que le cliquet rotatif 2 comporte deux excroissances radiales 21 et 22 dont la première 22 est apte est venir en butée contre le pêne 4 pour le maintenir en position de retenue de gâche G et la seconde 21 est une rotule apte à être déplacée par le levier de transmission 1.

I1 va de soi qu'une autre disposition spatiale est possible tout en maintenant la fonction du cliquet 2 et celle du pêne 4. L'extrémité de l'excroissance radiale 22 repose sur une surface complémentaire de butée du pêne 4 pour l'empêcher de tourner dans le sens antihoraire en référence à la figure 5.

La rotule 21 du cliquet 2 est prise en tenaille par les deux dents 141 et 142 de la fourche 14 de l'extrémité de 12 du levier de transmission 1.

Sur cette figure 5 on distingue, à l'extrémité proximale 12 du cliquet 2 appartenant au levier de transmission, un troisième bras 13 s'étendant transversalement à partir du bras 12 et comportant un évidement 131 apte à recevoir un élément d'entrainement de l'actionneur 3.

La figure 7 permet de distinguer selon une autre vue ce troisième bras 13 ainsi que l'évidement 131. Une surface latérale de l' évidement se trouvant sur le plan dans lequel s'effectue la rotation du levier de transmission 1 peut servir de guidage à la rotation.

L'entrainement du levier de transmission s'effectue grâce à la roue dentée entraînée 35 illustrée en détail à la figure 8. On voit sur cette figure que cette roue entraînée, en rotation par le moteur 31 à travers un engrenage E possède des éléments d'entrainement 351 et 352 en saillie axiale par rapport à l'axe de rotation A4 de la roue entraînée 35. Ces éléments d'entrainements sont préférentiellement des pions en forme de goutte d'eau.

Les deux pions 351 et 352 sont diamétralement opposés, permettant une rotation de 180° pour, à chaque fois, pouvoir déplacer le levier de transmission 1 par appui sur les parois coplanaires de l'évidement 131. Le second pion vient en butée arrêter le déplacement du bras 13.

On comprendra qu'afin de gagner en compacité, les axes A1 et A4 sont parallèles, les axes A2 et A3 sont parallèles, et que ces axes A2 et A3 sont perpendiculaires aux axes A1 et A4.

En outre, le cliquet 2 est une pièce centrale de la serrure selon l'invention. Celui-ci est principalement mu selon l'invention par l'actionneur 3. L'accès par le coffre à la serrure du dossier de siège étant peu pratique, une commande électrique pourra être disposée dans une localisation facile d'accès pour déverrouiller la serrure et rendre le siège rabattable sans avoir à effectuer de retour dans l'habitacle sur les places arrière pour baisser manuellement le ou les sièges.

Le cliquet peut être déplacé selon deux directions : dans un sens vers une position d'effacement par rapport au déplacement du pêne 4 et dans l'autre sens vers une position de blocage de rotation du pêne 4. En référence à la figure 4B, l'effacement se fera en rotation antihoraire quand le blocage se fera en rotation horaire.

Le déplacement vers une position d'effacement par rapport au déplacement du pêne 4 peut s'effectuer de manière manuelle en agissant directement sur la poignée 110 ou de manière motorisée, et donc commandée à distance, à travers l'actionneur motorisé 3. Dans les deux cas, le déplacement est une rotation autour de l'axe A1 du levier de transmission 1.

Après effacement du trajet rotatif du pêne 4 pour libérer une gâche, le retour du cliquet se fait préférentiellement à l'aide d un moyen élastique de type ressort 6 apte à le rappeler vers la position de blocage du pêne 4 dans la position de retenue de gâche G.

Le pêne 4 est aussi associé à un moyen élastique apte à le rappeler vers la position de libération de gâche G. Le retour du pêne vers sa position de retenue de gâche est provoqué par la gâche G (cf. fig.3) lors du retour du dossier de siège vers la position non rabattue.

L'entrée de la gâche dans le dégagement 41 du pêne (cf. fig. 5) crée une rotation horaire en référence à la figure 5 ramenant le pêne en position de retenue et le ressort de rappel du cliquet 2 va entrainer une rotation horaire du cliquet 2 vers la position de blocage anti rotation antihoraire du pêne 4.

On va désormais expliquer le déplacement motorisé du levier de transmission vers la position d'effacement par rapport au déplacement du pêne 4 à l'aide des figures 6A et 6B. Il s'agit de la même configuration dans ces deux figures, la figure 6B montre la roue dentée entraînée 35 en transparence pour laisser s'illustrer les pions d'entrainement 351 et 352.

En référence à la figure 6B, lorsque le moteur 31 tourne sous l'effet d'une commande à distance, il entraine en rotation la vis sans fin 32 qui elle même entraîne en rotation une roue dentée entraînante 33. La roue dentée entraînante 33 entraîne en rotation la roue dentée entraînée 35 par le biais d'un pignon 34.

Enfin, la roue dentée entraînée 35 présente deux pions 351 et 352 diamétralement opposés, radialement excentrés et en saillie axiale par rapport à son axe de rotation A4. Lors de la rotation de la roue 35, ces pions viennent entrainer successivement, comme montré à la figure 6B, le troisième bras 13 par butée à chaque demi-tour soit 180°. Quand l'un des pions (351,353) entraine le levier de transmission 1, le deuxième pion à la fin du déplacement nécessaire pour libérer le pêne via le cliquet, vient en appui sur l'extrémité plane 132 du troisième bras 13 de la fig.7 qui arrête en rotation la roue dentée 35. Cette extrémité 132 est en face de celle sur laquelle le premier pion appui pour entrainer le troisième bras 136. Ce pion (351,352) est maintenant en position pour faire l'entrainement du levier de transmission 1 pour un nouveau cycle de déverrouillage après que le dossier soit a nouveau verrouillé sur sa gâche.

Ceci explique pourquoi la serrure selon l'invention est complètement autonome, il n'est pas nécessaire de réinitialiser l'actionneur par une marche arrière du moteur 31 ou tout autre système de remise en place des éléments. Aussi, c'est pourquoi les pions sont situés à 180° l'un de l'autre pour que le premier entraine le levier de transmission et que le second serve de butée de fin de course.

Ainsi, on déplace le troisième bras 13, ce dernier faisant partie du levier de transmission 1, l'entraine dans son déplacement et permet de déplacer à son tour le cliquet 2 pour l'emmener vers sa position d'effacement par rapport au mouvement du pêne 4. On peut ainsi libérer le siège pour pouvoir le rabattre de manière électrique sans avoir besoin d'utiliser la poigné 110.

La serrure selon l'invention présente des composants pouvant être produits et assemblés de manière à ce que l'ensemble puisse être fixé préférentiellement sur l'armature d'un siège rabattable de véhicule automobile.

## Revendications

1. Serrure électrique (S) pour un siège rabattable de véhicule automobile, située à l'intérieur d'un boîtier (B), ladite serrure (S) comprenant :
- un moyen de verrouillage (4) apte à se déplacer entre une position dans laquelle une gâche(G) est retenue et une position dans laquelle ladite gâche (G) est libérée,
- un élément de blocage (2) apte à se déplacer entre une position de blocage du moyen de verrouillage (4) dans ladite position de retenue de gâche (G) et une position d'effacement par rapport au déplacement du moyen de verrouillage (4)
- un levier de transmission (1) solidaire avec l'élément de blocage (2) de manière à le déplacer entre lesdites positions de blocage du moyen de verrouillage (4) en position de retenue de gâche (G) et d'effacement par rapport au mouvement de déplacement du moyen de verrouillage (4),
- un actionneur (3) comportant un moteur électrique (31), ledit actionneur étant apte à déplacer ledit levier de transmission (1),
**caractérisée en ce que**
ledit levier de transmission (1) se déplace autour d'un axe de rotation (A1) et possède deux bras (11, 12) s'étendant radialement à partir de l'axe (A1), le premier bras (11) présentant à son extrémité une poignée (110) pour déplacer manuellement le levier de transmission (1) et le second bras (12) présentant à son extrémité un moyen de solidarisation (14) avec l'élément de blocage (2).

2. Serrure électrique (S) selon la revendication 1 **caractérisée en ce que** le moyen de verrouillage (4) est un pêne rotatif autour d'un axe (A2) comprenant un dégagement (41) apte à recevoir une gâche (G) et
l'élément de blocage (2) est un cliquet rotatif autour d'un axe (A3),ledit cliquet comportant deux excroissances radiales (21,22) dont la première (22) est apte est venir en butée contre le pêne (4) pour le maintenir en position de retenue de gâche (G) et la seconde (21) est une rotule apte à être déplacée par le levier de transmission (1).

3. Serrure électrique (S) selon l'une quelconque des revendications précédentes **caractérisée en ce que** le moyen de solidarisation (14) présente la forme d'une fourche à deux dents (141,142), dont l'espace entre les deux dents (143) est apte à saisir l'élément de blocage (2) pour pouvoir le déplacer entre lesdites positions de blocage et d'effacement.

4. Serrure électrique (S) selon l'une quelconque des revendications précédentes **caractérisée en ce que** le moyen de solidarisation (14) comporte un troisième bras (13) s'étendant transversalement et comportant un évidement (131) apte à recevoir un élément d'entrainement (351,352) de l'actionneur (3).

5. Serrure électrique (S) selon l'une quelconque des revendications précédentes **caractérisée en ce que** l'actionneur (3) comporte une vis sans fin (32) entrainée en rotation par ledit moteur (31), la vis (32) entraînant en rotation une roue dentée entraînante (33) apte à entraîner en rotation à son tour une roue dentée entraînée (35), ladite roue dentée entraînée (35) présentant au moins un élément d'entraînement (351,352) radialement excentré et en saillie axiale par rapport à son axe de rotation (A4).

6. Serrure électrique (S) selon la revendication 5 **caractérisée en ce que** ladite roue dentée entraînée (35) présente deux éléments d'entraînements (351,352) diamétralement opposés et disposés sur la même face de ladite roue dentée entraînée (35).

7. Serrure électrique (S) selon l'une quelconque des revendications 5 ou 6 **caractérisée en ce que** la roue dentée entraînante (33) entraîne en rotation la roue dentée entraînée (35) par le biais d'un pignon (34).

8. Serrure électrique (S) selon l'une quelconque des revendications 4 à 7 **caractérisée en ce que** l'élément d'entrainement (351,352) est un pion en forme de goutte d'eau en saillie axiale de la roue dentée entraînée (35) de manière à déplacer le levier de transmission par butée sur les surfaces de contact de l'évidement (131).

9. Serrure électrique (S) selon l'une quelconque des revendications 5 à 8 **caractérisée en ce que** les axes (A1) et (A4) sont parallèles, les axes (A2) et (A3) sont parallèles, lesdits axes (A2) et (A3) étant perpendiculaires aux axes (A1) et (A4).

10. Serrure électrique (S) selon l'une quelconque des revendications précédentes **caractérisée en ce que** l'élément de blocage (2) est relié à un moyen élastique (6) apte à le rappeler vers la position de blocage du moyen de verrouillage (4) dans ladite position de retenue de gâche (G) et **en ce que** le moyen de verrouillage (4) est relié à un moyen élastique apte à le rappeler vers la position de libération de gâche (G).

11. Serrure électrique (S) selon l'une quelconque des revendications précédentes **caractérisée en ce que** ladite serrure (S) est solidaire d'un support (P) apte à être solidarisé avec une armature de siège.

12. Serrure électrique (S) selon l'une quelconque des revendications précédentes **caractérisée en ce que** ladite serrure (S) ne comprend pas de câble ni tige pour déplacer le moyen de verrouillage (4) dans une position dans laquelle ladite gâche (G) est libérée.

13. Serrure électrique (S) selon l'une quelconque des revendications précédentes **caractérisée en ce que** ladite serrure ne comprend pas de commutateur afin de fournir une instruction d'arrêt au moteur.

## Patentansprüche

1. Elektrisches Schloss (S) für einen Klappsitz eines Kraftfahrzeuges, das sich im Inneren eines Gehäuses (B) befindet, wobei das Schloss (S) umfasst:
- ein Verriegelungsmittel (4), das imstande ist, sich zwischen einer Position, in der eine Schließklappe (G) zurückgehalten wird, und einer Position zu verschieben, in der die Schließklappe (G) freigegeben ist,
- ein Blockierelement (2), das imstande ist, sich zwischen einer Blockierposition des Verriegelungsmittels (4) in der Rückhalteposition der Schließklappe (G) und einer Löschposition in Bezug auf die Verschiebung des Verriegelungsmittels (4) zu verschieben
- einen Übertragungshebel (1), der derart fest mit dem Blockierelement (2) verbunden ist, um es zwischen der Blockierposition des Verriegelungsmittels (4) in der Rückhalteposition der Schließklappe (G) und Löschposition in Bezug auf die Verschiebebewegung des Verriegelungsmittels (4) zu verschieben,
- ein Stellglied (3), das einen Elektromotor (31) beinhaltet, wobei das Stellglied imstande ist, den Übertragungshebel (1) zu verschieben,
**dadurch gekennzeichnet, dass**
sich der Übertragungshebel (1) um eine Drehachse (A1) herumverschiebt und zwei Arme (11, 12) besitzt, die sich radial aus der Achse (A1) heraus erstrecken, wobei der erste Arm (11) an seinem Ende einen Griff (110) aufweist, um den Übertragungshebel (1) von Hand zu verschieben, und der zweite Arm (12) an seinem Ende ein Mittel zum festen Verbinden (14) mit dem Blockierelement (2) aufweist.

2. Elektrisches Schloss (S) nach Anspruch 1, **dadurch gekennzeichnet, dass** das Verriegelungsmittel (4) ein Drehriegel um eine Achse (A2) ist, der einen Freiraum (41) umfasst, der imstande ist, eine Schließklappe (G) aufzunehmen, und das Blockierelement (2) eine um eine Drehachse (A3) drehbare Sperrklinke ist, wobei die Sperrklinke zwei radiale Ausstülpungen (21, 22) beinhaltet, von denen die erste (22) imstande ist, sich auf Anschlag an den Riegel (4) anzulegen, um ihn in Rückhalteposition der Schließklappe (G) zu halten, und die zweite (21) ein Kugelgelenk ist, das imstande ist, von dem Übertragungshebel (1) verschoben zu werden.

3. Elektrisches Schloss (S) nach einem der vorstehenden Ansprüche, **dadurch gekennzeichnet, dass** das Mittel zum festen Verbinden (14) die Form einer Gabel mit zwei Zähnen (141, 142) aufweist, deren Raum zwischen den beiden Zähnen (143) imstande ist, das Blockierelement (2) zu ergreifen, um es zwischen der Blockier- und Löschsposition zu verschieben.

4. Elektrisches Schloss (S) nach einem der vorstehenden Ansprüche, **dadurch gekennzeichnet, dass** das Mittel zum festen Verbinden (14) einen dritten Arm (13) beinhaltet, der sich querlaufend erstreckt und eine Aussparung (131) beinhaltet, die imstande ist, ein Antriebselement (351, 352) des Stellglieds (3) aufzunehmen.

5. Elektrisches Schloss (S) nach einem der vorstehenden Ansprüche, **dadurch gekennzeichnet, dass** das Stellglied (3) eine Schnecke (32) beinhaltet, die von dem Motor (31) in Drehung angetrieben wird, wobei die Schnecke (32) ein Antriebszahnrad (33) in Drehung antreibt, das imstande ist, seinerseits ein angetriebenes Zahnrad (35) in Drehung anzutreiben, wobei das angetriebene Zahnrad (35) mindestens ein radial exzentrisches und axial hervorstehendes Antriebselement (351, 352) in Bezug auf seine Drehachse (A4) aufweist.

6. Elektrisches Schloss (S) nach Anspruch 5, **dadurch gekennzeichnet, dass** das angetriebene Zahnrad (35) zwei diametral entgegengesetzte, und auf derselben Seite des angetriebenen Zahnrads (35) angeordnete Antriebselemente (351, 352) aufweist.

7. Elektrisches Schloss (S) nach einem der Ansprüche 5 oder 6, **dadurch gekennzeichnet, dass** das Antriebszahnrad (33) das angetriebene Zahnrad (35) durch ein Ritzel (34) in Drehung antreibt.

8. Elektrisches Schloss (S) nach einem der Ansprüche 4 bis 7, **dadurch gekennzeichnet, dass** das Antriebselement (351, 352) ein Stift in Form eines Wassertropfens ist, der axial aus dem angetriebenen Zahnrad (35) hervorsteht, um den Übertragungshebel durch Anschlag an den Kontaktoberflächen der Aussparung (131) zu verschieben.

9. Elektrisches Schloss (S) nach einem der Ansprüche 5 bis 8, **dadurch gekennzeichnet, dass** die Achsen (A1) und (A4) parallel sind, die Achsen (A2) und (A3) parallel sind, wobei die Achsen (A2) und (A3) senkrecht zu den Achsen (A1) und (A4) sind.

10. Elektrisches Schloss (S) nach einem der vorstehenden Ansprüche, **dadurch gekennzeichnet, dass** das Blockierelement (2) an ein elastisches Mittel (6) angeschlossen ist, das imstande ist, es in die Blockierposition des Verriegelungsmittels (4) in der Rückhalteposition der Schließklappe (G) rückzustellen, und dadurch, dass das Verriegelungsmittel (4) an ein elastisches Mittel angeschlossen ist, das imstande ist, es in die Freigabeposition der Schließklappe (G) rückzustellen.

11. Elektrisches Schloss (S) nach einem der vorstehenden Ansprüche, **dadurch gekennzeichnet, dass** das Schloss (S) fest mit einer Halterung (P) verbunden ist, die imstande ist, fest mit einem Sitzgestell verbunden zu werden.

12. Elektrisches Schloss (S) nach einem der vorstehenden Ansprüche, **dadurch gekennzeichnet, dass** das Schloss (S) weder Kabel, noch Gestänge zum Verschieben des Verriegelungsmittels (4) in eine Position umfasst, in der die Schließklappe (G) freigegeben ist.

13. Elektrisches Schloss (S) nach einem der vorstehenden Ansprüche, **dadurch gekennzeichnet, dass** das Schloss keinen Schalter umfasst, um dem Motor eine Halteanweisung bereitzustellen.

## Claims

1. An electric latch (S) for a motor vehicle foldable seat, located inside a case (B), said latch (S) comprising:
- a locking means (4) adapted to move between a position in which a striker (G) is retained and a position in which said striker (G) is released,
- a blocking member (2) adapted to move between a position for blocking the locking means (4) in said striker (G) retaining position and a position for clearing the way with respect to the displacement of the locking means (4)
- a transmission lever (1) secured to the blocking member (2) so as to displace it between said position for blocking the locking means (4) in the striker (G) retaining position and said cleared position with respect to the displacement of the locking means (4),
- an actuator (3) including an electric motor (31), said actuator being adapted to displace said transmission lever (1),
**characterized in that**
said transmission lever (1) moves about an axis of rotation (A1) and has two arms (11,12) extending radially from the axis (A1), the first arm (11) having at its end a handle (110) for manually displacing the transmission lever (1) and the second arm (12) having at its end a means (14) for securing with the blocking element (2).

2. The electric latch (S) according to claim 1, **characterized in that** the locking means (4) is a bolt rotatable about an axis (A2) comprising a clearance (41) adapted to receive a striker (G) and the blocking element (2) is a pawl rotatable about an axis (A3), said pawl including two radial protuberances (21, 22), the first of which (22) is adapted to abut against the bolt (4) to hold it in the striker (G) retaining position and the second (21) is a ball joint adapted to be displaced by the transmission lever (1).

3. The electric latch (S) according to any one of the preceding claims, **characterized in that** the securing means (14) has the shape of a two-teethed fork (141, 142), with the space between the two teeth (143) being adapted to grip the blocking member (2) in order to be able to displace it between said blocking and cleared positions.

4. The electric latch (S) according to any one of the preceding claims, **characterized in that** the securing means (14) includes a third arm (13) extending transversely and including a recess (131) adapted to receive a drive element (351, 352) of the actuator (3).

5. The electric latch (S) according to any one of the preceding claims, **characterized in that** the actuator (3) includes a worm screw (32) driven in rotation by said motor (31), the screw (32) driving in rotation a driven toothed wheel (33) adapted to drive in rotation, in turn, a driven toothed wheel (35), said driven toothed wheel (35) having at least one drive element (351, 352) radially eccentric and protruding axially with respect to its axis of rotation (A4).

6. The electric latch (S) according to claim 5, **characterized in that** said driven toothed wheel (35) has two diametrically opposed drive members (351, 352) disposed on the same face of said driven toothed wheel (35).

7. The electric latch (S) according to any one of claims 5 or 6, **characterized in that** the driving toothed wheel (33) rotates the driven toothed wheel (35) by means of a pinion (34).

8. The electric latch (S) according to any one of claims 4 to 7, **characterized in that** the drive element (351,352) is a water drop-like shaped pin projecting axially from the driven toothed wheel (35) so as to displace the transmission lever by abutment on the contact surfaces of the recess (131).

9. The electric latch (S) according to any one of claims 5 to 8, **characterized in that** the axes (A1) and (A4) are parallel, the axes (A2) and (A3) are parallel, said axes (A2) and (A3) being perpendicular to the axes (A1) and (A4).

10. The electric latch (S) according to any one of the preceding claims, **characterized in that** the blocking element (2) is connected to an elastic means (6) adapted to return it towards the position of blocking the locking means (4) in said striker (G) retaining position and **in that** the locking means (4) is connected to an elastic means adapted to return it towards the striker (G) release position.

11. The electric latch (S) according to any one of the preceding claims, **characterized in that** said latch (S) is secured to a support (P) adapted to be secured to a seat frame.

12. The electric latch (S) according to any one of the preceding claims, **characterized in that** said latch (S) does not comprise a cable or a rod to displace the locking means (4) into a position in which said striker (G) is released.

13. The electric latch (S) according to any one of the preceding claims, **characterized in that** said latch does not comprise a switch in order to provide a stop command to the motor.
